# EUROPÄISCHE PATENTSCHRIFT

(11) **EP 0 913 289 B1**
(45) Veröffentlichungstag und Bekanntmachung des Hinweises auf die Patenterteilung: **08.05.2002**
(21) Anmeldenummer: 98116084.9
(22) Anmeldetag: 26.08.1998
(51) Int. Cl.: B60K 26/02

(54) **Fahrpedaleinheit für Fahrzeuge**
Accelerator pedal unit for vehicles
Module de pédale d'accélérateur pour véhicules

(30) Priorität: 31.10.1997 DE 19748145
(43) Veröffentlichungstag der Anmeldung: 06.05.1999
(73) Patentinhaber: DaimlerChrysler AG, 70567 Stuttgart (DE)
(72) Erfinder: Löchle, Manfred, 70329 Stuttgart (DE); Papenhagen, Dieter, 71334 Waiblingen (DE)

(56) Entgegenhaltungen:
- WO-A-89/07706
- DE-A- 19 503 335
- DE-C- 19 531 735
- US-A- 5 241 936

## Beschreibung

Die Erfindung betrifft eine Fahrpedaleinheit für Fahrzeuge nach der im Oberbegriff von Anspruch 1 näher definierten Art.

Eine gattungsgemäße Fahrpedaleinheit ist z.B. in der DE 195 31 735 A1 beschrieben. Durch eine derartige Fahrpedaleinheit läßt sich eine Herstellungsvereinfachung für eine rationelle Serienfertigung, insbesondere eine Vormontage erreichen. Dabei erfolgt die Weiterleitung der Bewegung bzw. Stellung des Pedalhebels zum Motor des Fahrzeugs auf elektronische bzw. elektrische Weise über eine Sensorwelle und damit zusammenwirkende die Pedalstellung registrierende Meßglieder, welche in einem Sensorgehäuse angeordnet sind. Das Sensorgehäuse, in das die Sensorwelle ragt, ist an dem Pedalgehäuse befestigt. Über eine für den Pedalhebel vorgesehene Lagerhülse geführte Seilzüge wirken im Sinne einer Reibbremse und geben damit dem Fahrer ein entsprechendes Fahrgefühl bei Betätigung des Pedales. Durch eine Lagerbohrung des Pedalgehäuses und durch die Lagerhülse ist eine Gleitbuchse geschoben, in deren Innerem die Sensorwelle geführt ist. Die Gleitbuchse hat dabei eine Doppelfunktion; nämlich zum einen dient sie für die Lagerhülse als drehsichere Montage- und Verschlußbuchse und zum anderen stellt sie für die Sensorwelle eine Führungs- und Gleiteinrichtung dar.

Bei der Fahrpedaleinheit nach der DE 195 31 735 A1 wird die Gleitbuchse in axialer Richtung von einer Seite her in die Lagerbohrung des Pedalgehäuses und damit in die Lagerhülse eingeschoben, während auf der anderen Seite das Sensorgehäuse über die Lagerbohrung gesetzt und anschließend mit dem Pedalgehäuse verbunden wird. Der Drehwinkel der Pedaleinheit ist mit ca. 20° jedoch relativ gering. Dies bedeutet, um eine hohe Genauigkeit zu erzielen, müssen die die Stellung des Pedalhebels und damit des Pedales ermittelnden Teile sehr empfindlich sein und dürfen nur geringe Toleranzen aufweisen.

Der vorliegenden Erfindung liegt daher eine weitere Verbesserung der gattungsgemäßen Fahrpedaleinheit zugrunde, insbesondere eine weitere Vereinfachung für eine Serienfertigung, wobei darüber hinaus auch eine höhere Genauigkeit und Prozeßsicherheit bezüglich der Ermittlung der Fahrpedalstellung erzielt werden soll.

Erfindungsgemäß wird diese Aufgabe durch die im kennzeichnenden Teil von Anspruch 1 genannten Merkmale gelöst.

Durch die erfindungsgemäße Kombination von Gleitbuchse und Sensorgehäuse bzw. deren Einstückigkeit wird die Meßgenauigkeit der die Pedalhebelbewegung messenden Teile verbessert. Darüberhinaus werden Meßfehler aufgrund von Toleranzen und Einbauungenauigkeiten vermieden. So werden z.B. durch die Einstückigkeit Querbewegungen zwischen den Teilen vermieden, die sich ebenfalls nachteilig auf die Meßgenauigkeit auswirken.

Ein weiterer Vorteil der erfindungsgemäßen Lösung liegt in der Montagevereinfachung, da Gleitbuchse und Sensorgehäuse in einem Arbeitsgang gemeinsam in die Pedaleinheit eingesetzt werden können.

Vorteilhafte Weiterbildungen und Ausgestaltungen der Erfindung ergeben sich aus dem nachfolgend anhand der Zeichnung prinzipmäßig beschriebenen Ausführungsbeispiel.

Es zeigt:
- Fig. 1: eine Gesamtansicht der Fahrpedaleinheit;
- Fig. 2: einen Schnitt nach der Linie II-II der Fig. 1;
- Fig. 3: einen Schnitt nach der Linie III-III der Fig. 2; und

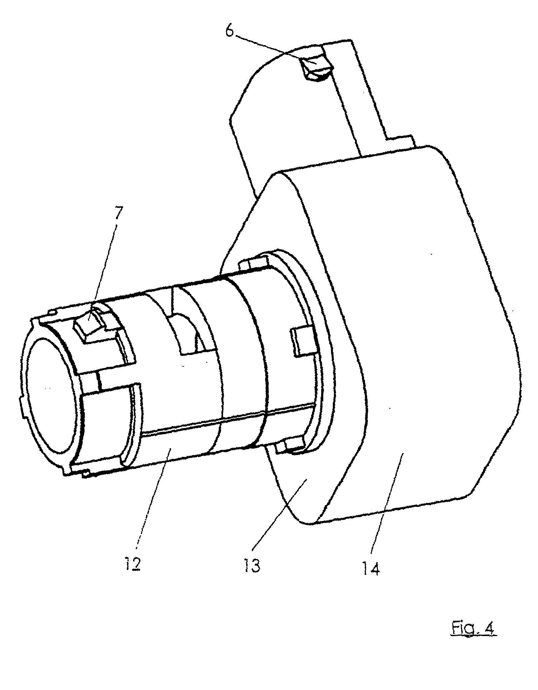

- Fig. 4: eine perspektivische vergrößerte Darstellung der aus Gleitbuchse und Sensorgehäuse bestehenden Einheit.

Da die Fahrpedaleinheit grundsätzlich von bekannter Bauart und bekannter Wirkungsweise ist, wozu z.B. auf die eingangs genannte DE 195 31 735 A1 verwiesen wird, wird nachfolgend nur auf die für die Erfindung wesentlichen Teile näher eingegangen. Die Fahrpedaleinheit weist ein Pedal 1 auf, das über eine Steckverbindung 2 mit einem Pedalhebel 3 verbunden ist. Der Pedalhebel 3 ist über ein Lagerauge 4 in dem Pedalhebel 3 auf der von der Steckverbindung 2 abgewandten Seite des Pedalhebels 3 schwenkbar mit einem Pedalgehäuse 5 verbunden. Nach einem kompletten Zusammenbau der Fahrpedaleinheit wird das Pedalgehäuse 5 und damit die auf ihm vormontierte Einheit auf beliebige Weise mit einer Fahrzeugwand verbunden.

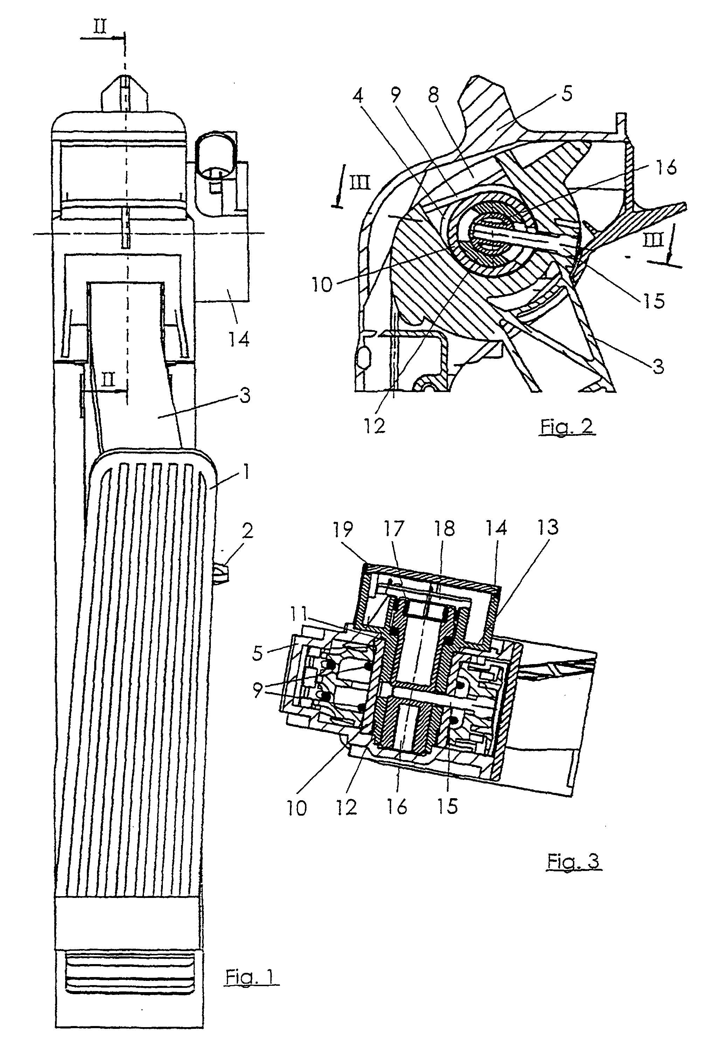

Das Lagerauge 4 ist über einen Teilbereich seiner äußeren Umfangswand mit zwei parallel nebeneinander angeordneten Teilumfangsschlitzen 8 versehen, über die zwei parallel nebeneinander liegende Seilzüge 9 eingeführt werden. Die Seilzüge 9 umschlingen eine Lagerhülse 10, die in eine Lagerbohrung 11 des Lagergehäuses 5 und die Lagerbohrung 4 des Pedalhebels 3 eingeschoben ist. Die Lagerhülse 10 besitzt eine axiale Länge, die etwas größer ist als die Breite des Lagerauges 4. Auf diese Weise wird sie unter einer entsprechenden Klemmwirkung und damit spielfrei in die Lagerbohrung 11 des Lagergehäuses 5 eingeklemmt. Die Lagerhülse 10 wirkt als eine Art Reibbuchse bzw. Reibring zwischen den die Lagerhülse 10 schlaufenartig umhüllenden Seilzüge 9 und der inneren Umfangswand bzw. der Lagerbohrung des Lagerauges 4 des Pedalhebels 3. Von einer Seite her wird in die Lagerbohrung 11 (in der Zeichnung von rechts her) eine Gleitbuchse 12 in den freien Innenraum der Lagerhülse 10 eingeschoben. Mit der Gleitbuchse 12 ist über einen Ringboden 13 ein Sensorgehäuse 14 einstückig (siehe Fig. 3).

Durch ein Fenster in der Lagerhülse 10 ist mit Spiel ein Mitnahmestift 15 gesteckt, der in dem Pedalhebel 3 gelagert ist. Der Mitnahmestift 15 erstreckt sich zusätzlich quer durch eine Sensorwelle 16, die von der offenen Seite des Lagergehäuses 14 aus in die Gleitbuchse 12 eingeschoben ist. Über den Mitnahmestift 15 ist somit die Sensorwelle 16 mit dem Pedalhebel 3 und damit mit dem Pedal 1 verbunden, was bedeutet, daß die Sensorwelle 16 die Bewegung des Pedals 1 mitmacht. Da das Sensorgehäuse 13 über eine Rastverbindung mit nicht näher dargestellten Rastgliedern 6 und 7 7 ortsfest mit dem Pedalgehäuse 5 und der Lagerhülse 10 auf der Einschubseite der Gleitbuchse 12 verbunden ist, ist ein Fenster entsprechender Größe in der Umfangswand der Gleitbuchse 12 freizuhalten, damit eine freie Pedalbewegung möglich ist. Aus diesem Grunde muß auch das Fenster in der Lagerhülse 10 mit dem Fenster in der Gleitbuchse 12 fluchten.

In dem Sensorgehäuse 14 befinden sich nicht näher dargestellte Meßglieder, die berührungslos mit der Sensorwelle 16 zur Feststellung der Pedalstellung zusammenarbeiten. Hierzu besitzt die Sensorwelle 16 an ihrer dem Sensorgehäuse 14 zugewandten Seite einen Ringmagnet 17, der mit einer Leiterplatte 18, die z.B. mit einem Hallsensor versehen ist, zusammenwirkt. Ein Hallsensor reagiert berührungslos auf Änderungen des Magnetflusses, welche in elektrische Signale umgesetzt und von dem Sensorgehäuse 14 aus in nicht näher dargestellter Weise weitergeleitet werden.

Nach Abschluß der Montage wird die offene Stirnseite des Sensorgehäuses 14 durch einen Deckel 19 abgeschlossen.

Durch die einstückige Ausgestaltung von Gleitbuchse 12 und Sensorgehäuse 14 und deren Verbindung über den Ringboden 13, da das Sensorgehäuse einen größeren Durchmesser aufweist als die Gleitbuchse 12, kann eine bisher erforderliche Abdichtung zwischen der Gleitbuchse 12 und dem Sensorgehäuse 14 entfallen. Dies bedeutet, die Verbindung des Sensorgehäuses bzw. der aus Gleitbuchse 12 und Sensorgehäuse 14 bestehenden Einheit mit dem Pedalgehäuse 5 kann in einfacher Weise durch eine Verrastung mit den Rastgliedern 6 und 7 erfolgen. Eine Abdichtung, z.B. durch eine Klebeschicht zwischen dem Sensorgehäuse 14 und dem Pedalgehäuse 5, wie es beim Stand der Technik erforderlich war, kann damit entfallen.

In einfacher Weise wird man die aus der Gleitbuchse 12 und dem Sensorgehäuse 14 bestehende Einheit aus Kunststoff herstellen, im allgemeinen aus einem Spritzgußteil. Im Bedarfsfalle kann zusätzlich noch eine einfache Verschraubung des Sensorgehäuses 14 mit dem Pedalgehäuse 5 erfolgen.

## Patentansprüche

1. Fahrpedaleinheit für Fahrzeuge mit einem an einem Pedalhebel (3) befestigten Pedal (1), wobei der Pedalhebel (3) auf der von dem Pedal (1) abgewandten Seite über ein Lagerauge (4) drehbar in einer Lagerbohrung (11) eines Pedalgehäuses gelagert ist, wobei wenigstens eine auf den Pedalhebel einwirkende Rückzugsfeder vorgesehen und zur Bildung einer Lagerstelle für den Pedalhebel eine Lagerhülse in die Lagerbohrung des Pedalgehäuses (5) eingesetzt ist, wobei durch die Lagerbohrung (11) und die Lagerhülse (10) eine Gleitbuchse (12) geschoben ist, in deren Inneren eine Sensorwelle (16) geführt ist, welche mit in einem Sensorgehäuse (14) angeordneten, die Pedalstellung registrierenden Meßgliedern/zusammenwirkt, und wobei das Sensorgehäuse (14) im Bereich der Lagerbohrung an dem Pedalgehäuse (5) befestigt ist,
**dadurch gekennzeichnet, daß**
die Gleitbuchse (12) und das Sensorgehäuse (14) einstückig ausgebildet sind, wobei die Gleitbuchse (12) von einer Axialseite aus in die Lagerbohrung (11) des Pedalgehäuses (5) eingeschoben und das Sensorgehäuse (14) auf der Einschubseite an dem Pedalgehäuse (5) befestigt ist.

2. Fahrpedaleinheit nach Anspruch 1,
**daduch gekennzeichnet, daß** zwischen der Gleitbuchse (12) und dem Sensorgehäuse (14) ein Ringboden (13) angeordnet ist.

3. Fahrpedaleinheit nach Anspruch 2,
**dadurch gekennzeichnet, daß** das Sensorgehäuse (14) durch Rastglieder (6) mit dem Pedalgehäuse (5) verbunden ist.

4. Fahrpedaleinheit nach Anspruch 1, 2 oder 3,
**dadurch gekennzeichnet, daß** die aus dem Sensorgehäuse (14) und der Gleitbuchse (12) gebildete Einheit aus Kunststoff besteht.

## Claims

1. An accelerator pedal unit for vehicles with a pedal (1) fixed to a pedal lever (3), the pedal lever (3) being mounted on the side facing away from the pedal (1) via a bearing eye (4) in a bearing hole (11) in a pedal housing (5) in such a way that it can rotate, with at least one return spring acting on the pedal lever being provided and a bearing sleeve being introduced into the bearing hole of the pedal housing (5) to form a bearing point for the pedal lever, with a guide bush (12) - through which a sensor shaft (16) runs
- being pushed through the bearing hole (11) and the bearing sleeve (10), said sensor shaft (16) co-operating with sensing devices located in a sensor housing (14) which register the position of the pedal, and the sensor housing being fixed to the pedal housing (5) in the area of the boring hole,
**characterised in that**
the guide bush (12) and the sensor housing (14) are designed as one piece with the guide bush (12) being inserted into the bearing hole (11) in the pedal housing (5) from one axial side and the sensor housing being fixed to the pedal housing (5) on the side of insertion.

2. An accelerator pedal unit in accordance with Claim 1,
**characterised in that**
an annular base (13) is positioned between the guide bush (12) and the sensor housing (14).

3. An accelerator pedal unit in accordance with Claim 2,
**characterised in that**
the sensor housing (14) is connected to the pedal housing (5) by means of snap-on elements (6).

4. An accelerator pedal unit in accordance with Claim 1, 2 or 3,
**characterised in that**
the unit formed by the sensor housing (14) and the guide bush (12) is made of plastic.

## Revendications

1. Unité de pédale d'accélérateur pour véhicules, comportant une pédale (1) fixée sur un levier de pédale (3), dans laquelle le levier de pédale (3) est monté mobile en rotation, sur le coté détourné de la pédale (1), dans un perçage de montage (11) d'un carter de pédale via un oeillet de montage (4), il est prévu au moins un ressort de rappel agissant sur le levier de pédale, et une douille de palier est mise en place dans le perçage de montage du carter de pédale (5) pour former un emplacement de montage pour le levier de pédale, un manchon à glissement (12) est introduit à travers le perçage de montage (11) et à travers la douille de palier (10) et à l'intérieur de ce manchon est guidé un arbre palpeur (16) qui coopère avec des organes de mesure agencés dans un boîtier de palpeur (14) et enregistrant la position de la pédale, et le boîtier de palpeur (14) est fixé dans la zone du perçage de montage sur le carter de pédale (5), **caractérisée en ce que** le manchon à glissement (12) et le boîtier de palpeur (14) sont réalisés d'un seul tenant, **en ce que** le manchon à glissement (12) est introduit depuis un côté axial dans le perçage de montage (11) du carter de pédale (5), et **en ce que** le boîtier de palpeur (14) est fixé sur le côté introduction sur le carter de pédale (5).

2. Unité de pédale d'accélérateur selon la revendication 1, **caractérisée en ce qu'**un fond annulaire (13) est agencé entre le manchon à glissement (12) et le boîtier de palpeur (14).

3. Unité de pédale d'accélérateur selon la revendication 2, **caractérisée en ce que** le boîtier de palpeur (14) est relié au carter de pédale (5) par des organes d'enclenchement (6).

4. Unité de pédale d'accélérateur selon les revendications 1, 2 ou 3, **caractérisée en ce que** l'unité formée par le boîtier de palpeur (14) et par le manchon à glissement (12) est constituée en matière plastique.
